# EUROPÄISCHE PATENTSCHRIFT

(11) **EP 3 498 544 B1**
(45) Veröffentlichungstag und Bekanntmachung des Hinweises auf die Patenterteilung: **24.07.2024**
(21) Anmeldenummer: 18207310.6
(22) Anmeldetag: 20.11.2018
(51) Int. Cl.: B60R 25/00, B60R 16/023

(54) **VERFAHREN UND COMPUTERPROGRAMM ZUM FREISCHALTEN EINER FAHRZEUGKOMPONENTE SOWIE FAHRZEUG**
METHOD AND COMPUTER PROGRAM FOR UNLOCKING A VEHICLE COMPONENT AND A VEHICLE
PROCÉDÉ ET PROGRAMME INFORMATIQUE PERMETTANT DE LIBÉRER UN COMPOSANT DE VÉHICULE, ET VÉHICULE

(30) Priorität: 15.12.2017 DE 102017222879
(43) Veröffentlichungstag der Anmeldung: 19.06.2019
(73) Patentinhaber: VOLKSWAGEN AKTIENGESELLSCHAFT, 38440 Wolfsburg (DE)
(72) Erfinder: Winkelvos, Timo, 38173 Sickte (DE); Tschache, Alexander, 38436 Wolfsburg (DE)

(56) Entgegenhaltungen:
- EP-A1- 1 959 606
- EP-A1- 3 157 281
- DE-A1- 102005 024 818
- DE-A1- 102007 058 975
- DE-A1- 102008 015 195
- US-A1- 2010 146 174

## Beschreibung

Die vorliegende Erfindung bezieht sich auf ein Verfahren und ein Computerprogramm zum Freischalten einer Fahrzeugkomponente sowie ein Fahrzeug, genauer, aber nicht ausschließlich, auf ein Freischalten einer ersten Fahrzeugkomponente basierend auf einer bereits durch einen gesicherten Verbund von Fahrzeugkomponenten freigeschaltenen zweiten Fahrzeugkomponente.

Fahrzeuge umfassen eine Vielzahl von verschiedenen Fahrzeugkomponenten - von den Antriebsmodulen wie dem Getriebe und dem Motor über Kommunikationsmodule wie einer Fahrzeug-zu-Fahrzeug-Kommunikationsschnittstelle oder einer Mobilfunkschnittstelle bis zu Komfortfunktionen wie Sitzheizungen. Um Diebstähle von Fahrzeugkomponenten zu verhindern und sicherzustellen, dass Fahrzeugkomponenten nur in dem Fahrzeug genutzt werden, in das sie durch den Hersteller oder eine Fachwerkstatt eingesetzt wurden, kann es erstrebenswert sein, die Fahrzeugkomponenten an ein Fahrzeug zu koppeln und lediglich zur Nutzung freizuschalten, wenn sie sich in dem richtigen Fahrzeug befinden.

Die Europäische Patentanmeldung EP 3 148 152 A1 zeigt ein Verfahren zum sicheren Verteilen von kryptografischen Schlüsseln für Steuergeräte von Fahrzeugen. Die Europäische Patentanmeldung EP 3 157 281 A1 zeigt ein Verfahren zur geschützten Kommunikation eines Fahrzeugs, das ebenfalls auf dem Erzeugen und Verteilen von Schlüsselpaaren basiert.

Es besteht der Bedarf nach einem verbesserten Konzept zum Freischalten einer Nutzung von Fahrzeugkomponenten.

Diesem Bedarf wird durch das Verfahren und das Computerprogramm sowie das Fahrzeug der unabhängigen Ansprüche Rechnung getragen.

Ausführungsbeispiele schaffen Verfahren und ein Computerprogramm zum Freischalten einer Fahrzeugkomponente eines Fahrzeugs sowie ein Fahrzeug. Freischalten bezieht sich im Folgenden darauf, dass die Fahrzeugkomponente, die freigeschalten wird, in einem Regelbetrieb des Fahrzeugs genutzt werden kann. Vor der Freischaltung einer Fahrzeugkomponente kann beispielsweise eine Diagnose der Fahrzeugkomponente oder Funktionalität, die zur Freischaltung der Fahrzeugkomponente notwendig ist ausgeführt werden. Der volle Funktionsumfang der Fahrzeugkomponente, beispielsweise das Senden und Empfangen von Fahrzeug-zu-Fahrzeug-Kommunikationssignalen im Falle eines Fahrzeug-zu-Fahrzeug-Kommunikationsmoduls, kann beispielsweise erst nach dem Freischalten der Fahrzeugkomponente genutzt werden.

In zumindest einigen Ausführungsbeispielen basiert die Freischaltung auf einer transitiven Nutzung einer vorherig erfolgten Freischaltung: Ist bekannt, dass ein gesicherter Verbund von anderen Fahrzeugkomponenten, etwa ein Wegfahrsperrenverbund oder ein Diebstahlschutzverbund, in dem Fahrzeug freigeschalten ist, so kann diese Information genutzt werden, um auch andere Fahrzeugkomponenten freizuschalten. Voraussetzung dafür kann sein, mit einer Fahrzeugkomponente aus dem Verbund zu kommunizieren, wobei Kommunizieren in diesem Fall bereits das Empfangen oder Wahrnehmen einer Nachricht der Fahrzeugkomponente auf einem Bus des Fahrzeugs sein kann. Anhand dieser Nachricht kann etwa festgestellt werden, dass der Verbund freigeschalten ist (also die Sicherheitsfunktionalität des Verbunds es beispielsweise festgestellt hat, dass keine Fahrzeugkomponente des gesicherten Verbunds kompromittiert wurde) und eine Legitimität der Fahrzeugkomponente, von der die Nachricht empfangen wurde festgestellt werden kann (etwa über ein kryptographisches Verfahren oder über eine Plausibilisierung der Nachricht). Sind diese beiden Kriterien erfüllt, so kann die freizuschaltende Fahrzeugkomponente freigeschalten werden.

Ausführungsbeispiele schaffen ein Verfahren zum Freischalten einer ersten Fahrzeugkomponente eines Fahrzeugs. Das Verfahren umfasst Empfangen zumindest einer Nachricht von einer zweiten Fahrzeugkomponente. Die zweite Fahrzeugkomponente ist Teil eines gesicherten Verbunds von Fahrzeugkomponenten des Fahrzeugs, wobei der gesicherte Verbund von Fahrzeugkomponenten eine Mehrzahl von Fahrzeugkomponenten, die gegenseitig so verknüpft sind, dass ein Kompromittieren einer Fahrzeugkomponente der Mehrzahl von Fahrzeugkomponenten ein Freischalten der anderen Fahrzeugkomponenten der Mehrzahl von Fahrzeugkomponenten des gesicherten Verbunds verhindert, umfasst. Das Verfahren umfasst ferner Legitimieren der zweiten Fahrzeugkomponente basierend auf der zumindest einen von der zweiten Fahrzeugkomponente empfangenen Nachricht. Das Verfahren umfasst ferner Freischalten der ersten Fahrzeugkomponente, falls die zumindest eine empfangene Nachricht impliziert, dass die zweite Fahrzeugkomponente basierend auf dem gesicherten Verbund von Fahrzeugkomponenten freigeschalten wurde und falls die Legitimierung der zweiten Fahrzeugkomponente erfolgreich ist.

Das Nutzen des Wissens, dass die zweite Fahrzeugkomponente durch den gesicherten Verbund freigeschalten wurde, ermöglicht es, die Sicherheit, die dadurch erzielt wurde, auch für andere Fahrzeugkomponenten, etwa die erste Fahrzeugkomponente, (transitiv) zu nutzen. Gleichzeitig ist die erste Fahrzeugkomponente in zumindest manchen Ausführungsbeispielen nicht Teil des gesicherten Verbunds - bei einem Defekt der ersten Fahrzeugkomponente wird somit der gesicherte Verbund nicht lahmgelegt. Durch die Legitimierung der zweiten Fahrzeugkomponente kann nun überprüft, dass es sich bei der zweiten Fahrzeugkomponente a) um eine Fahrzeugkomponente des gesicherten Verbunds handelt und b) die Fahrzeugkomponente Teil des gesicherten Verbunds des "richtigen" Fahrzeugs ist.

In zumindest manchen Ausführungsbeispielen umfasst das Legitimieren der zweiten Fahrzeugkomponente ein Legitimieren der zweiten Fahrzeugkomponente basierend auf einem Aufforderung-Antwort-Authentifizierungsverfahren (auch engl. Challenge-Response). Dabei kann ein aus einem gemeinsamen Geheimnis (etwa einem kryptografischem Schlüssel) abgeleiteter Wert, der für beide Fahrzeugkomponenten berechnet wird, verglichen werden, um die zweite Fahrzeugkomponente gegenüber der ersten Fahrzeugkomponente zu legitimieren. Zudem können beispielsweise lediglich Nachrichten, die für die Legitimierung genutzt werden, den abgeleiteten Wert umfassen, eine kryptografische Signierung oder Verschlüsselung aller Nachrichten kann beispielsweise vermieden werden.

In einigen Ausführungsbeispielen umfasst das Legitimieren der zweiten Fahrzeugkomponente ein Legitimieren der zweiten Fahrzeugkomponente durch eine Plausibilitätsprüfung eines Inhalts der zumindest einen Nachricht. So kann beispielsweise eine Legitimierung der zweiten Fahrzeugkomponenten möglich sein, ohne dass kryptografisch gesicherte Nachrichten verwendet werden müssen.

In zumindest einigen Ausführungsbeispielen umfasst das Legitimieren der zweiten Fahrzeugkomponente ein Legitimieren der zweiten Fahrzeugkomponente basierend auf kryptografisch geschützten Nachrichten der zweiten Fahrzeugkomponente. Dies kann beispielsweise die Legitimierung der zweiten Fahrzeugkomponente mittels erprobter kryptografischer Methoden ermöglichen.

Beispielsweise können die kryptografisch geschützten Nachrichten kryptografisch signiert sein. Alternativ oder zusätzlich können die kryptografisch geschützten Nachrichten kryptografisch verschlüsselt sein. Durch Prüfung der Signatur oder durch Entschlüsseln der Nachrichten basierend auf zumindest einem vorbekannten Schlüssel kann etwa die Identität der kommunizierenden Fahrzeugkomponente festgestellt oder verifiziert werden und dadurch die zweite Fahrzeugkomponente legitimiert werden. Alternativ oder zusätzlich können die kryptografisch geschützten Nachrichten einen basierend auf einem kryptografischen Schlüssel berechneten Wert umfassen. So können beispielsweise alle oder ein Verbund von Fahrzeugkomponenten eines Fahrzeugs den gleichen Schlüssel umfassen. Berechnen diese aus diesem Schlüssel und einer Zufallszahl einen Wert, so kann dieser Wert von einer weiteren Fahrzeugkomponente mit dem gleichen Schlüssel anhand der Zufallszahl verifiziert werden, und somit die Zugehörigkeit der Fahrzeugkomponenten zum gleichen Fahrzeug oder zum gleichen Verbund von Fahrzeugen festgestellt werden. Dabei kann die Zufallszahl beispielsweise von der Fahrzeugkomponente ("Senke", etwa die erste Fahrzeugkomponente) bereitgestellt werden, die von einer anderen Fahrzeugkomponente ("Quelle", etwa die zweite Fahrzeugkomponente) den berechneten Wert anfordert, um die Identität der anderen Fahrzeugkomponente zu verifizieren (Anforderung-Antwort-Verfahren, auch engl. Challenge-Response), oder die Zufallszahl kann von einer unabhängigen dritten ("vertrauenswürdigen") Instanz bereitgestellt oder aus ihr abgeleitet werden.

In manchen Ausführungsbeispielen umfasst das Verfahren ferner Speichern kryptografischer Informationen über zuvor empfangene kryptografisch geschützte Nachrichten der zweiten Fahrzeugkomponente. Alternativ können die kryptografischen Informationen von der ersten Fahrzeugkomponente oder der zweiten Fahrzeugkomponente erhalten werden. Die kryptografischen Informationen können beispielsweise Information über einen kryptografischen Schlüssel, der zumindest von der zweiten Fahrzeugkomponente verwendet wird, umfassen. Die zweite Fahrzeugkomponente wird legitimiert, falls kryptografisch geschützte Nachrichten, die innerhalb eines vordefinierten Zeitintervalls vor dem Freischalten der Fahrzeugkomponente empfangen wurden, im Einklang stehen mit den gespeicherten kryptografischen Informationen. So können die Nachrichten der zweiten Fahrzeugkomponente mit den kryptografischen Informationen verglichen werden, um die zweite Fahrzeugkomponente zu legitimieren. Beispielsweise können die kryptografischen Informationen den Schlüssel des Fahrzeugs oder Verbunds umfassen, oder für jede Kommunikation zwischen zwei Fahrzeugkomponenten kann ein (gemeinsamer) Schlüssel umfasst sein. Denkbar ist auch ein System mit privaten und öffentlichen Schlüsseln, wobei die kryptografischen Informationen die öffentlichen Schlüssel der Mehrzahl von weiteren Fahrzeugkomponenten umfassen können.

In manchen Ausführungsbeispielen kann das Empfangen der zumindest einen Nachricht von der zweiten Fahrzeugkomponente implizieren, dass die zweite Fahrzeugkomponente basierend auf dem gesicherten Verbund von Fahrzeugkomponenten freigeschalten wurde. Beispielsweise kann die zweite Fahrzeugkomponente ausgebildet sein, um erst zu kommunizieren, wenn sie durch den gesicherten Verbund freigeschalten wurde. Somit kann das Empfangen der Nachricht als Bestätigung dafür, dass die zweite Fahrzeugkomponente freigeschalten wurde, gewertet werden. In manchen Ausführungsbeispielen kann so eine beidseitige Kommunikation zum Legitimieren der zweiten Fahrzeugkomponente vermieden werden.

In zumindest einigen Ausführungsbeispielen impliziert die zumindest eine empfangene Nachricht, dass die zweite Fahrzeugkomponente basierend auf dem gesicherten Verbund von Fahrzeugkomponenten freigeschalten wurde, falls die zumindest eine empfangene Nachricht impliziert, dass die zweite Fahrzeugkomponente einen vordefinierten Zustand aufweist. Beispielsweise kann die empfangene Nachricht Information darüber umfassen, ob sich die zweite Fahrzeugkomponente in einem freigeschaltenen oder in einem nicht freigeschaltenen Zustand befindet. Alternativ oder zusätzlich kann die empfangene Nachricht Information darüber umfassen, ob der gesicherte Verbund integer ist oder nicht. In manchen Ausführungsbeispielen kann die zumindest eine empfangene Nachricht implizieren, dass die zweite Fahrzeugkomponente basierend auf dem gesicherten Verbund von Fahrzeugkomponenten freigeschalten wurde, falls die zumindest eine empfangene Nachricht impliziert, dass durch die zweite Fahrzeugkomponente eine vordefinierte Aktion ausgeführt wird. Beispielsweise kann die empfangene Nachricht Information über im Regelbetrieb durch die zweite Fahrzeugkomponente ausgeführte Aktionen umfassen, beispielsweise Messwerte oder Nachrichten, die auf den Regelbetrieb der zweiten Fahrzeugkomponente hindeuten.

In zumindest einigen Ausführungsbeispielen ist die Fahrzeugkomponente nicht Teil des gesicherten Verbunds von Fahrzeugkomponenten. Beispielsweise kann der gesicherte Verbund die zweite Fahrzeugkomponente freischalten, ohne die Fahrzeugkomponente oder die Vorrichtung zu involvieren. Das kann eine Komplexität des gesicherten Verbunds reduzieren. Gleichzeitig kann beispielsweise verhindert werden, dass ein Ausfall der ersten Fahrzeugkomponente den gesicherten Verbund lahmlegt.

In manchen Ausführungsbeispielen kann die zumindest eine Nachricht, auf der die Freischaltung der ersten Fahrzeugkomponente basiert, zumindest eine Nachricht ist, die zum Regelbetrieb der ersten Fahrzeugkomponente oder zum Regelbetrieb der zweiten Fahrzeugkomponente genutzt wird. Die zumindest eine Nachricht, auf der die Freischaltung der ersten Fahrzeugkomponente basiert, kann zumindest eine Nachricht sein, die nicht ausschließlich zum Zweck der Freischaltung der ersten Fahrzeugkomponente empfangen wird oder die nicht ausschließlich zum Zweck der Freischaltung der ersten Fahrzeugkomponente von der zweiten Fahrzeugkomponente gesendet wird. Die Nutzung von Nachrichten, die ohnehin von der zweiten Fahrzeugkomponente gesendet werden, kann eine zweiseitige Kommunikation zum Zwecke der Freischaltung der ersten Fahrzeugkomponente erübrigen.

Ausführungsbeispiele schaffen ferner ein Programm mit einem Programmcode zum Durchführen des Verfahrens, wenn der Programmcode auf einem Computer, einem Prozessor, einem Kontrollmodul oder einer programmierbaren Hardwarekomponente ausgeführt wird.

Ausführungsbeispiele schaffen ferner ein Fahrzeug umfassend eine erste Fahrzeugkomponente sowie eine zweite Fahrzeugkomponente. Das Fahrzeug umfasst ferner eine Vorrichtung zum Freischalten der ersten Fahrzeugkomponente. Die Vorrichtung umfasst zumindest eine Schnittstelle, die zur Kommunikation mit der zweiten Fahrzeugkomponente des Fahrzeugs ausgebildet ist, und ein Kontrollmodul. Die zumindest eine Schnittstelle und das Kontrollmodul sind ausgebildet, dass erfindungsgemäße Verfahren durchzuführen.

In manchen Ausführungsbeispielen kann der gesicherte Verbund von Fahrzeugkomponenten zumindest eine weitere Vorrichtung umfassen. Die Vorrichtung kann zusammen mit dem gesicherten Verbund von Fahrzeugkomponenten einen weiteren gesicherten Verbund von Fahrzeugkomponenten bilden. So kann die Freischaltung der zweiten Fahrzeugkomponente etwa transitiv weitergegeben werden. Beispielsweise kann die zweite Fahrzeugkomponente basierend auf dem gesicherten Verbund, beispielsweise dem Wegfahrsperrenverbund, freigeschaltet werden. Die Vorrichtung kann diese Information nutzen, um die erste Fahrzeugkomponente freizugeben. Die erste Fahrzeugkomponente (mit der Vorrichtung) kann zusammen mit dem ursprünglichen gesicherten Verbund einen weiteren gesicherten Verbund von Fahrzeugkomponenten bilden. So kann etwa die Freigabe der ersten Fahrzeugkomponente genutzt werden, um eine dritte Fahrzeugkomponente (mit einer weiteren Vorrichtung gemäß einem der vorherigen Ausführungsbeispiele) freizugeben. In anderen Worten kann die Freigabe der ersten Fahrzeugkomponente basierend auf der zweiten Fahrzeugkomponente transitiv an die dritte Fahrzeugkomponente weitergegeben werden.

In zumindest einigen Ausführungsbeispielen ist die erste Fahrzeugkomponente ein Fahrzeug-zu-Fahrzeug-Kommunikationsmodul. Eine Fahrzeug-zu-Fahrzeug-Kommunikation des Fahrzeug-zu-Fahrzeug-Kommunikationsmoduls basiert auf der Freischaltung des Fahrzeug-zu-Fahrzeug-Kommunikationsmoduls. So kann in manchen Ausführungsbeispielen verhindert werden, dass das Fahrzeug-zu-Fahrzeug-Kommunikationsmodul außerhalb des Fahrzeugs betrieben wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 zeigt ein Blockdiagramm einer Vorrichtung zum Freischalten einer Fahrzeugkomponente;
Fig. 2 zeigt ein Flussdiagramm eines Verfahrens zum Freischalten einer Fahrzeugkomponente;
Fign. 3a-3e zeigen Ausführungsbeispiele einer skalierbaren Verbundauthentifikation.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Zumindest manche Ausführungsbeispiele schaffen transitiv und quantitativ skalierbare Verbundauthentifikationen in einem Fahrzeug (oder genereller in einem verteilten System).

In einem beispielhaften Ausführungsbeispiel darf ein Car2Car (Fahrzeug-zu-Fahrzeug) Steuergerät (das etwa für eine digitale Dachantenne genutzt werden kann) nicht außerhalb des Fahrzeugs zum Senden von C2C-Nachrichten verwendet werden. Die Erlaubnis des Sendens kann beispielsweise verschiedene Eigenschaften des Fahrzeugzustands voraussetzen, die kombiniert eine qualitative und quantitative Erhöhung des Vertrauens in die Eigenschaft ermöglichen können. Auch einige andere Funktionen, die fahrzeugextern senden, können beispielsweise verlangen, dass (nur) das echte Fahrzeug sendet. Dieses Konzept kann beispielsweise auf andere Steuergeräte im Fahrzeug übertragen werden, die nicht außerhalb des Fahrzeugs nutzbar sein sollen, das Konzept ist nicht auf Car2Car-Steuergeräte beschränkt.

In manchen Systemen kann festgestellt werden, ob sich ein Steuergerät in einem bestimmten Fahrzeug befindet, indem die Fahrzeugidentifikationsnummer (auch engl. Vehicle Identification Number, VIN) über den Fahrzeug-Bus geprüft wird. Alternativ oder zusätzlich kann das entsprechende Steuergerät in den Wegfahrsperrenverbund und/oder in den Komponentenschutz (Schutz von Komponenten vor Diebstahl) angebunden werden. Dabei können diese Anbindungen Funktionen sein, die direkt nur dafür vorgesehen sind die Zugehörigkeit des Steuergeräts zum Fahrzeug festzustellen, d.h. zusätzliche Funktion(en). Die Anbindungen können mit einer separaten Funktion zur Feststellung, ob sich das Fahrzeug in einem authentifizierten Verbund befindet (in der Regel einem Master/Slave (engl. Herr-Sklave) System) genutzt werden. Es kann beachtet werden, dass das Prüfen der VIN technisch in manchen Fällen nicht ausreichend sein kann, da ein Angreifer möglicherweise die VIN manipulieren (auch aus dem engl. entlehnt "spoofen") könnte. Im Fall der Anbindung des Steuergeräts in den Wegfahrsperrenverbund kann etwa das Risiko bestehen, dass das Fahrzeug bei Problemen mit dem Steuergerät stillgelegt werden kann, wobei das Steuergerät mit der Freigabe der Wegfahrsperre aus Diebstahlschutzsicht eigentlich nichts zu tun hat. Zudem kann bei der Anbindung eine zusätzliche Funktion ohne funktionalen Nutzen für das Steuergerät integriert werden, und damit Overhead (zusätzlicher Verwaltungsaufwand) geschaffen werden. Zudem kann eine Skalierung schwierig sein, da diese Anbindungen meist Master/Slave-Systeme sind, d.h. das Steuergerät kann beispielsweise nur die Anwesenheit eines weiteren Steuergeräts feststellen.

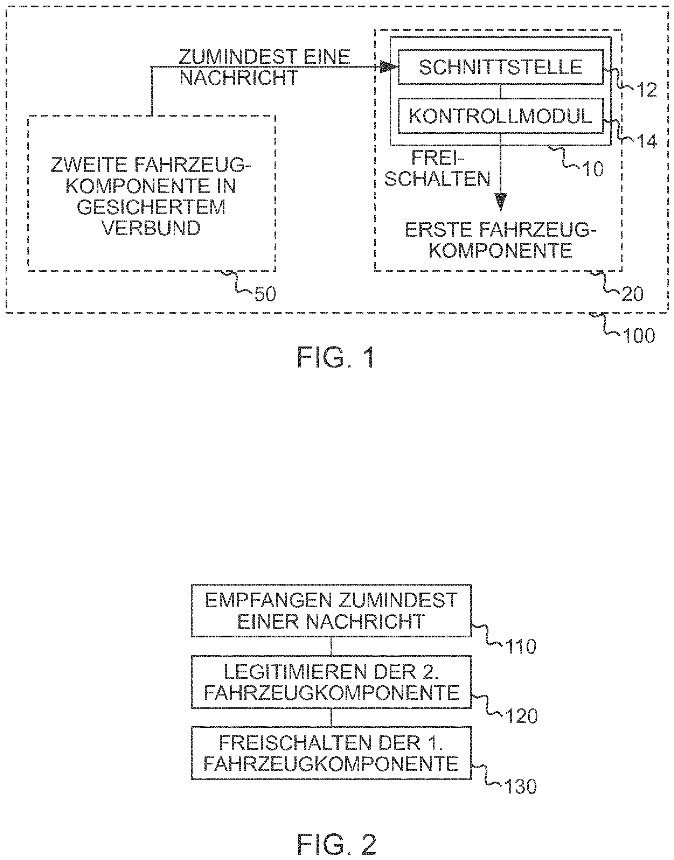

Fig. 1 zeigt ein Blockdiagramm einer Vorrichtung 10 zum Freischalten einer ersten Fahrzeugkomponente 20 eines Fahrzeugs 100. Die Vorrichtung 10 umfasst zumindest eine Schnittstelle 12, ausgebildet zur Kommunikation mit einer zweiten Fahrzeugkomponente 50 des Fahrzeugs 100. Die zweite Fahrzeugkomponente 50 ist Teil eines gesicherten Verbunds von Fahrzeugkomponenten des Fahrzeugs 100. Die Vorrichtung 10 umfasst ferner ein Kontrollmodul 14, ausgebildet zum Steuern der zumindest einen Schnittstelle 12. Das Kontrollmodul 14 ist ferner ausgebildet zum Empfangen zumindest einer Nachricht von der zweiten Fahrzeugkomponente 50 über die zumindest eine Schnittstelle 12. Das Kontrollmodul 14 ist ferner ausgebildet zum Legitimieren der zweiten Fahrzeugkomponente 50 basierend auf der zumindest einen von der zweiten Fahrzeugkomponente 50 empfangenen Nachricht. Das Kontrollmodul 14 ist ferner ausgebildet zum Freischalten der ersten Fahrzeugkomponente 20, falls die zumindest eine empfangene Nachricht impliziert, dass die zweite Fahrzeugkomponente 50 basierend auf dem gesicherten Verbund von Fahrzeugkomponenten freigeschalten wurde und falls die Legitimierung der zweiten Fahrzeugkomponente 50 erfolgreich ist.

Fig. 1 zeigt ferner die erste Fahrzeugkomponente 20 umfassend die Vorrichtung 10, und das Fahrzeug 100 umfassend die erste Fahrzeugkomponente 20 mit der Vorrichtung 10 und die zweite Fahrzeugkomponente 50. Die zumindest eine Schnittstelle 12 ist mit dem Kontrollmodul 14 gekoppelt.

Fig. 2 zeigt ein entsprechendes Verfahren zum Freischalten der ersten Fahrzeugkomponente 20 des Fahrzeugs 100. Das Verfahren umfasst Empfangen 110 der zumindest einen Nachricht von der zweiten Fahrzeugkomponente 50. Die zweite Fahrzeugkomponente 50 ist Teil des gesicherten Verbunds von Fahrzeugkomponenten des Fahrzeugs 100. Das Verfahren umfasst ferner Legitimieren 120 der zweiten Fahrzeugkomponente 50 basierend auf der zumindest einen von der zweiten Fahrzeugkomponente 50 empfangenen Nachricht. Das Verfahren umfasst ferner Freischalten 130 der ersten Fahrzeugkomponente 20, falls die zumindest eine empfangene Nachricht impliziert, dass die zweite Fahrzeugkomponente 50 basierend auf dem gesicherten Verbund von Fahrzeugkomponenten freigeschalten wurde und falls die Legitimierung der zweiten Fahrzeugkomponente 50 erfolgreich ist. Die folgende Beschreibung bezieht sich sowohl auf die Vorrichtung 10 von Fig. 1 als auch auf das Verfahren von Fig. 2.

Das Freischalten von Fahrzeugkomponenten bezeichnet in zumindest manchen Ausführungsbeispielen das Freigeben oder Aktivieren eines Regelbetriebs der Fahrzeugkomponente und/oder das Freischalten einer Nutzung der Fahrzeugkomponente. Vor der Freischaltung einer Fahrzeugkomponente kann beispielsweise eine Diagnose der Fahrzeugkomponente oder Funktionalität, die zur Freischaltung der Fahrzeugkomponente notwendig ist, ausgeführt werden. Durch das Freischalten der Fahrzeugkomponente kann der volle Funktionsumfang der Fahrzeugkomponente freigegeben werden. Das Freischalten der ersten Fahrzeugkomponente kann beispielsweise die Nutzung der Fahrzeugkomponente im Regelbetrieb aktivieren. Eine Fahrzeugkomponente (etwa die erste Fahrzeugkomponente, die zweite Fahrzeugkomponente oder die Fahrzeugkomponenten des gesicherten Verbunds von Fahrzeugkomponenten) können beispielsweise freigeschalten werden, wenn eine Überprüfung ergibt, dass sich die Fahrzeugkomponente in dem Fahrzeug befindet, für das sie vorgesehen ist.

Die erste Fahrzeugkomponente, die zweite Fahrzeugkomponente und/oder die Fahrzeugkomponenten des gesicherten Verbdungs können beispielsweise Komponenten des Fahrzeugs sein, die ausgebildet sind, innerhalb des Fahrzeugs mit anderen Fahrzeugkomponenten zu kommunizieren, etwa Steuergeräte, Aktoren, Sensoren, Kontrollmodule des Fahrzeugs. In einem beispielhaften Ausführungsbeispiel kann die erste Fahrzeugkomponente beispielsweise ein Fahrzeug-zu-Fahrzeug-Kommunikationsmodul sein. Beispielsweise können die erste Fahrzeugkomponente, die zweite Fahrzeugkomponente und/oder die Fahrzeugkomponenten des gesicherten Verbdungs ausgebildet sein, über einen Fahrzeugbus, etwa einen Kontroll-Netzwerk-Bus (auch engl. Controller Area Network Bus, CAN Bus) oder ein lokales Verbindungsnetzwerk (auch engl. Local Interconnect Network, LIN) (miteinander) zu kommunizieren.

In zumindest manchen Ausführungsbeispielen kann das Fahrzeug 100 beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Die zumindest eine Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die zumindest eine Schnittstelle 12 kann beispielsweise ausgebildet sein, um über den Kontroll-Netzwerk-Bus oder das lokale Verbindungsnetzwerk mit der zweiten Fahrzeugkomponente 50 des kommunizieren.

In zumindest einigen Ausführungsbeispielen kann die Kommunikation mit der zweiten Fahrzeugkomponente 50 eine zweiseitige Kommunikation sein. Beispielsweise kann die zumindest eine Schnittstelle 12 ausgebildet sein, um Nachrichten zu der zweiten Fahrzeugkomponente zu übertragen und Nachrichten von der zweiten Fahrzeugkomponente zu empfangen. Beispielsweise kann das Kontrollmodul 14 ausgebildet sein, um ein Challenge-Response-Verfahren durch Übermitteln einer Nachricht an die zweite Fahrzeugkomponente und Empfangen der Antwort von der zweiten Fahrzeugkomponente durchzuführen.

Alternativ kann die Kommunikation mit der zweiten Fahrzeugkomponente 50 eine einseitige Kommunikation sein. Beispielseise kann die Kommunikation (lediglich) Nachrichten umfassen, die von der zweiten Fahrzeugkomponente übermittelt werden und von der zumindest einen Schnittstelle empfangen werden. Beispielsweise kann die zumindest eine Schnittstelle 12 ausgebildet sein, um Nachrichten, die von der zweiten Fahrzeugkomponente über den Kontroll-Netzwerk-Bus oder über das lokale Verbindungsnetzwerk übertragen werden zu Empfangen oder mitzuhören, ohne dass diese Nachrichten explizit an die erste Fahrzeugkomponente 20 oder die Vorrichtung 10 adressiert sind. In zumindest manchen Ausführungsbeispielen kann die zumindest eine Schnittstelle 12 ausgebildet sein, um Nachrichten von der zweiten Fahrzeugkomponente 50 zu empfangen.

In zumindest manchen Ausführungsbeispielen kann der gesicherte Verbund von Fahrzeugkomponenten eine Mehrzahl von Fahrzeugkomponenten umfassen, die gegenseitig so verknüpft sind, dass ein Kompromittieren einer Fahrzeugkomponente der Mehrzahl von Fahrzeugkomponenten ein Freischalten der anderen Fahrzeugkomponenten der Mehrzahl von Fahrzeugkomponenten des gesicherten Verbunds verhindert. Beispielsweise können die Fahrzeugkomponenten des gesicherten Verbunds gegenseitig sicherstellen, dass keine Fahrzeugkomponente des gesicherten Verbunds kompromittiert wurde oder kompromittiert ist. Die erste Fahrzeugkomponente 20 ist in zumindest manchen Ausführungsbeispielen nicht Teil des gesicherten Verbunds von Fahrzeugkomponenten. Ein Defekt der ersten Fahrzeugkomponente 20 verhindert in zumindest einigen Ausführungsbeispielen nicht das Freischalten der Fahrzeugkomponenten des gesicherten Verbunds. In manchen Ausführungsbeispielen können sich die Fahrzeugkomponenten des gesicherten Verbunds gegenseitig gegen eine Manipulation schützen, etwa dagegen, dass Fahrzeugkomponenten des gesicherten Verbunds entnommen oder ersetzt werden oder dass Fahrzeugkomponenten des gesicherten Verbunds außerhalb des Fahrzeugs eingesetzt werden, zu dem sie zugewiesen sind. In manchen Ausführungsbeispielen kann der gesicherte Verbund ferner auf einer Aktion eines Fahrers des Fahrzeugs basieren, etwa auf dem Auslösen eines Motorstartes oder auf dem Einstecken oder Drehen eines Fahrzeugschlüssels. In manchen Ausführungsbeispielen kann der gesicherte Verbund ferner einen Fahrzeugschlüssel des Fahrzeugs umfassen, eine Freigabe der Fahrzeugkomponenten des gesicherten Verbunds kann darauf basieren, dass der Fahrzeugschlüssel ein Freigabesignal bereitstellt. Die Terme "sicherstellen", "schützen" und "verhindern" sind dabei nicht in einem absoluten Sinn zu verstehen; auch Maßnahmen, die einen ausreichend hohen, wenn auch nicht einhundertprozentigen Schutz bieten, fallen unter die Terme "sicherstellen", "schützen" und "verhindern", so dass ein gesicherter Verbund auch ein Verbund sein kann, der in Ausnahmefällen durchbrochen werden kann. Der gesicherte Verbund kann die zweite Fahrzeugkomponente freischalten, ohne die Fahrzeugkomponente 20 oder die Vorrichtung 10 zu involvieren.

In manchen Ausführungsbeispielen kann der gesicherte Verbund ein Wegfahrsperrenverbund des Fahrzeugs sein. Der Wegfahrsperrenverbund kann beispielsweise die Fahrzeugkomponenten des Fahrzeugs 100 umfassen, auf deren Integrität eine Wegfahrsperre des Fahrzeugs 100 beruht. Der Wegfahrsperrenverbund kann beispielsweise den Fahrzeugschlüssel des Fahrzeugs umfassen. In manchen Ausführungsbeispielen können die Fahrzeugkomponenten des Fahrzeugsperrenverbunds freigeschaltet werden, falls die Fahrzeugkomponenten des Fahrzeugsperrenverbunds integer (also nicht kompromittiert, nicht manipuliert) sind und der Fahrzeugschlüssel das (richtige) Freigabesignal bereitstellt.

In zumindest einigen Ausführungsbeispielen kann der gesicherte Verbund ein Diebstahlschutzverbund des Fahrzeugs sein. In dem Diebstahlschutzverbund können sich beispielsweise Fahrzeugkomponenten des Fahrzeugs gegenseitig davor schützen, aus dem Fahrzeug entfernt zu werden. Nach dem Entfernen einer Fahrzeugkomponente des Diebstahlschutzverbunds kann beispielsweise ein Betrieb der entfernten Fahrzeugkomponente in einem anderen Fahrzeug verhindert werden. Ein Entfernen einer der Komponenten des Diebstahlschutzverbunds kann beispielsweise einen Alarm auslösen. Alternativ oder zusätzlich kann der Diebstahlschutzverbund des Fahrzeugs ein Verbund von Fahrzeugkomponenten des Fahrzeugs sein, die dazu ausgebildet sind, einen Diebstahl des gesamten Fahrzeugs zu erschweren oder zu verhindern. Beispielsweise kann der Diebstahlschutzverbund eines Fahrzeugs ein oder mehrere Elemente der Gruppe von einer Alarmkomponente des Fahrzeugs, einer Schließkomponente des Fahrzeugs, einer Schlüsselkomponente des Fahrzeugs und einer Ortungskomponente des Fahrzeugs umfassen.

In Ausführungsbeispielen kann die das Kontrollmodul 14 einem beliebigen Controller oder Prozessor oder einer programmierbaren Hardwarekomponente entsprechen. Beispielsweise kann das Kontrollmodul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14 denkbar.

In zumindest manchen Ausführungsbeispielen umfasst das Empfangen der zumindest einen Nachricht von der zweiten Fahrzeugkomponente ein Empfangen der zumindest einen Nachricht über ein Bussystem oder über ein Peer-to-Peer-Netzwerksystem (von englisch peer "Gleichgestellter", "Ebenbürtiger"). Die zumindest eine Nachricht kann beispielsweise an die erste Fahrzeugkomponente 20 oder die Vorrichtung 10 adressiert sein. Alternativ kann das Kontrollmodul 14 ausgebildet sein, über die zumindest eine Schnittstelle 12 auf dem Fahrzeugbus mitzuhorchen und die zumindest eine Nachricht zu empfangen, auch wenn diese keinen dedizierten Empfänger oder einen anderen Empfänger spezifiziert. Beispielsweise kann die zumindest eine Nachricht, auf der die Freischaltung der ersten Fahrzeugkomponente 20 basiert, zumindest eine Nachricht sein, die zum Regelbetrieb der ersten Fahrzeugkomponente 20 oder zum Regelbetrieb der zweiten Fahrzeugkomponente 50 genutzt wird. In anderen Worten kann die zumindest eine Nachricht, auf der die Freischaltung der ersten Fahrzeugkomponente 20 basiert, zumindest eine Nachricht sein, die nicht ausschließlich zum Zweck der Freischaltung der Fahrzeugkomponente 20 über die zumindest eine Schnittstelle 12 empfangen wird oder die nicht ausschließlich zum Zweck der Freischaltung der ersten Fahrzeugkomponente von der zweiten Fahrzeugkomponente 50 gesendet wird. In manchen Ausführungsbeispielen kann das Kontrollmodul 14 ausgebildet sein, um die zumindest eine Nachricht als Antwort auf eine Anfrage/Aufforderung an das zweite Kommunikationsmodul zu empfangen, beispielsweise als Teil eines Aufforderung-Antwort-Authentifizierungsverfahrens.

In zumindest einigen Ausführungsbeispielen bedeutet oder impliziert eine erfolgreiche Legitimierung der zweiten Fahrzeugkomponente 50 durch das Kontrollmodul 14, dass das Kontrollmodul 14 der zweiten Fahrzeugkomponente 50 vertraut. Die erfolgreiche Legitimierung 50 kann bedeuten oder implizieren, dass das Kontrollmodul 14 ausreichend sicher ist, dass die zweite Fahrzeugkomponente 50 Teil des gesicherten Verbunds ist, dass der gesicherte Verbund für das Fahrzeug 100 vorgesehen ist, und/oder dass die zweite Fahrzeugkomponente 50 für den gesicherten Verbund vorgesehen ist. Der Term "vorgesehen ist" kann in diesem Zusammenhang bedeuten oder implizieren, dass der gesicherte Verbund mit dem Fahrzeug (kryptografisch) gekoppelt (auch ugs. "verdongelt") und/oder die zweite Fahrzeugkomponente 50 mit den weiteren Fahrzeugkomponenten des gesicherten Verbunds (kryptografisch) gekoppelt/verdongelt wurden, etwa durch einen Hersteller oder eine Fachwerkstatt des Herstellers des Fahrzeugs. Durch die Legitimierung der zweiten Fahrzeugkomponente 50 kann das Kontrollmodul 14 überprüfen, ob es sich bei der zumindest einen Nachricht, die es empfängt, um eine Nachricht der zweiten Fahrzeugkomponente 50 handelt, die Teil des gesicherten Verbunds ist. Das Legitimieren der zweiten Fahrzeugkomponente 50 kann beispielsweise ein feststellen und/oder identifizieren einen Identität der zweiten Fahrzeugkomponente 50 und/oder ein Überprüfen einer Zugehörigkeit der zweiten Fahrzeugkomponente 50 zu dem gesicherten Verbund umfassen.

Das Kontrollmodul 14 kann beispielsweise ausgebildet sein, um basierend auf der zumindest einen von der zweiten Fahrzeugkomponente 50 empfangenen Nachricht auf die Legitimität der zweiten Fahrzeugkomponente 50 zu schließen. In manchen Ausführungsbeispielen kann das Kontrollmodul 14 ausgebildet sein, um lediglich basierend auf einer (einzigen) empfangenen Nachricht die Legitimität der zweiten Fahrzeugkomponente zu bestimmen. In manchen Beispielen kann das Kontrollmodul 14 ausgebildet sein, vor dem Empfang der zumindest einen Nachricht, auf der die Legitimierung der zweiten Fahrzeugkomponente basiert, keine Nachrichten an die zweite Fahrzeugkomponente zu übermitteln. Alternativ kann die zumindest eine Nachricht eine Antwort sein auf eine Anfrage oder Aufforderung, die das Kontrollmodul 14 der zweiten Fahrzeugkomponente 50 übermittelt.

Beispielsweise kann das Kontrollmodul 14 ausgebildet sein, um die zweite Fahrzeugkomponente 50 basierend auf einem Aufforderung-Antwort-Authentifizierungsverfahren (auch engl. Challenge-Response) zu legitimieren. Beispielsweise kann das Kontrollmodul 14 ausgebildet sein, um der zweiten Fahrzeugkomponente eine Aufforderung oder Anfrage (des Aufforderung-Antwort-Authentifizierungsverfahrens) zu übermitteln, und die zumindest eine Nachricht der zweiten Fahrzeugkomponente 50 kann die Antwort auf die Aufforderung oder Anfrage sein. In manchen Ausführungsbeispielen können das Kontrollmodul 14 und die zweite Fahrzeugkomponente 50 ein gemeinsames Geheimnis, beispielsweise einen gemeinsamen kryptografischen Schlüssel umfassen. Das Kontrollmodul 14 kann ausgebildet sein, um die zweite Fahrzeugkomponente aufzufordern, einen Wert basierend auf einer Zufallszahl oder einer zufällige Zeichenfolge und basierend auf dem gemeinsamen Geheimnis zu berechnen. Das Kontrollmodul 14 kann ausgebildet sein, um die Zufallszahl oder die zufällige Zeichenfolge der zweiten Fahrzeugkomponente 50 zu übermitteln, etwa zusammen mit der Aufforderung. Das Kontrollmodul 14 kann ausgebildet sein, um den von der zweiten Fahrzeugkomponente 50 berechneten Wert umfasst in der zumindest einen Nachricht von der zweiten Fahrzeugkomponente zu empfangen. Das Kontrollmodul 14 kann ausgebildet sein, um den Wert basierend auf der Zufallszahl oder der zufälligen Zeichenfolge und basierend auf dem gemeinsamen Geheimnis selbst zu berechnen und den selbst berechneten Wert mit dem von der zweiten Fahrzeugkomponente 50 berechneten Wert zu vergleichen um die zweite Fahrzeugkomponente zu legitimieren. Beispielsweise kann das Kontrollmodul 14 für jede weitere zu legitimierende Fahrzeugkomponente ein gemeinsames Geheimnis umfassen. Alternativ kann das gemeinsame Geheimnis das gleiche sein für alle Fahrzeugkomponenten eines Fahrzeugs. Das gemeinsame Geheimnis kann beispielsweise bei der Fertigung des Fahrzeugs oder bei dem Einbau einer Fahrzeugkomponente durch eine Fachwerkstatt eingestellt werden.

Alternativ oder zusätzlich können die kryptografisch geschützten Nachrichten einen basierend auf einem kryptografischen Schlüssel berechneten Wert umfassen (der ähnlich implementiert sein kann wie in einem Aufforderung-Antwort-Authentifizierungsverfahren). In zumindest manchen Ausführungsbeispielen umfassen das Kontrollmodul 14 und die zweite Fahrzeugkomponente 50 ein gemeinsames Geheimnis in Form eines kryptografischen Schlüssels. In manchen Ausführungsbeispielen können alle oder ein Verbund von Fahrzeugkomponenten eines Fahrzeugs den gleichen Schlüssel umfassen. Das Kontrollmodul 14 kann ausgebildet sein, um einen basierend auf dem kryptografischen Schlüssel und einer Zufallszahl oder einer zufälligen Zeichenfolge berechneten Wert von der zweiten Fahrzeugkomponente 50 zu empfangen. In manchen Ausführungsbeispielen kann das Kontrollmodul 14 ausgebildet sein, um die Zufallszahl oder die zufällige Zeichenfolge als Teil der zumindest einen Nachricht von der zweiten Fahrzeugkomponente 50 zu empfangen. Dabei kann die Zufallszahl beispielsweise von einer dritten ("vertrauenswürdigen") Instanz für die zweite Fahrzeugkomponente 50 und/oder die erste Fahrzeugkomponente bereitgestellt werden. Alternativ oder zusätzlich kann das Kontrollmodul 14 ausgebildet sein, um die Zufallszahl oder die zufällige Zeichenfolge von einem Seed-Wert (engl. für Ausgangs-Wert) abzuleiten. Der Seed-Wert kann beispielsweise basierend auf einem Zeitwert berechnet werden (der beispielsweise von der vertrauenswürdigen dritten Instanz bereitgestellt werden kann), und gibt den Ausgangspunkt für die Berechnung der Zufallszahl oder der zufälligen Zeichenfolge an. Das Kontrollmodul 14 kann ausgebildet sein, um den von der zweiten Fahrzeugkomponente 50 empfangen Wert mit dem selbst berechneten Wert zu vergleichen um die zweite Fahrzeugkomponente 50 zu legitimieren.

In zumindest manchen Ausführungsbeispielen kann das Kontrollmodul 14 ausgebildet sein, um die zweite Fahrzeugkomponente 50 basierend auf kryptografisch geschützten Nachrichten der zweiten Fahrzeugkomponente 50 zu legitimieren. Beispielsweise können die kryptografisch geschützten Nachrichten kryptografisch signiert sein. Alternativ oder zusätzlich können die kryptografisch geschützten Nachrichten kryptografisch verschlüsselt sein. Beispielsweise kann das Kontrollmodul 14 ausgebildet sein, um eine Signatur der zumindest einen empfangenen Nachricht zu Prüfen und/oder um die zumindest eine empfangene Nachricht zu entschlüsseln um die zweite Fahrzeugkomponente 50 zu legitimieren. Entspricht die Signatur oder die Verschlüsselung der zumindest einen empfangenen Nachricht einer Erwartung des Kontrollmoduls 14, so kann die Legitimierung der zweiten Fahrzeugkomponente erfolgreich sein.

In zumindest manchen Ausführungsbeispielen kann das Kontrollmodul 14 ausgebildet sein, um kryptografische Informationen über zuvor empfangene kryptografisch geschützte Nachrichten der zweiten Fahrzeugkomponente 50 zu speichern. Alternativ kann das Kontrollmodul 14 ausgebildet sein, um die kryptografischen Information bei der Fertigung des Fahrzeugs oder bei einem Austausch der ersten Fahrzeugkomponente oder der zweiten Fahrzeugkomponente zu erhalten, etwa bei einem Einbau der Vorrichtung, der ersten Fahrzeugkomponente oder der zweiten Fahrzeugkomponente. Die kryptografischen Informationen können beispielsweise Information über einen von der zweiten Fahrzeugkomponente 50 verwendeten Schlüssel umfassen. Das Kontrollmodul 14 kann ausgebildet sein, um die zweite Fahrzeugkomponente 50 zu legitimieren, falls kryptografisch geschützte Nachrichten, die innerhalb eines vordefinierten Zeitintervalls vor dem Freischalten der Fahrzeugkomponente über die zumindest eine Schnittstelle 12 empfangen wurden, im Einklang stehen mit den gespeicherten kryptografischen Informationen. Eine kryptografisch geschützte Nachrichte kann mit den gespeicherten Identifikationsdaten im Einklang stehen, falls sich aus den kryptographischen Information eine Übereinstimmung mit der kryptografisch geschützte Nachricht ergibt, d.h. beispielsweise basierend auf einem Vergleich von Zeichenketten, oder durch Berechnen eines Wertes aus der Identität und/oder den gespeicherten kryptografischen Informationen. Eine kryptografisch geschützte Nachricht kann beispielsweise mit den gespeicherten kryptografischen Informationen im Einklang stehen, falls eine Signatur oder ein Schlüssel oder Schlüsselteil in den gespeicherten kryptografischen Informationen umfasst ist, etwa als Hash-Wert (Streuwert) oder (kryptografische) Signatur oder kryptografischer Schlüssel. Alternativ oder zusätzlich kann die kryptografisch geschützte Nachricht beispielsweise mit den gespeicherten kryptografischen Informationen im Einklang stehen, falls die (abgeleitete) Identität und die gespeicherten kryptografischen Informationen durch eine mathematische Funktion verknüpft werden können, die ergibt, ob die kryptografisch geschützte Nachricht und die gespeicherten kryptografischen Informationen im Einklang stehen. Beispielsweise kann das Kontrollmodul 14 ausgebildet sein, um eine Signatur oder eine Verschlüsselung mit den kryptografischen Informationen zu vergleichen, um zu bestimmen, ob die Signatur oder die Verschlüsselung kompatibel ist mit den kryptografischen Informationen. Ist sie kompatibel, so kann das Kontrollmodul 14 die zweite Fahrzeugkomponente beispielsweise erfolgreich legitimieren. Alternativ oder zusätzlich kann das Kontrollmodul 14 ausgebildet sein, um basierend auf den kryptografischen Informationen einen Wert zu berechnen, und den Wert mit einem von der zweiten Fahrzeugkomponente empfangenen Wert zu vergleichen. Stimmen die Werte überein, so kann das Kontrollmodul 14 die zweite Fahrzeugkomponente beispielsweise erfolgreich legitimieren.

Alternativ oder zusätzlich kann das Kontrollmodul 14 ausgebildet sein, um die zweite Fahrzeugkomponente 50 durch eine Plausibilitätsprüfung eines Inhalts der zumindest einen Nachricht zu legitimieren. Beispielsweise kann das Kontrollmodul 14 ausgebildet sein, um zu prüfen, ob die von der zweiten Fahrzeugkomponente empfangenen Nachrichten einen Inhalt aufweisen, der innerhalb eines zu erwartenden Rahmens liegt, oder ob die von der zweiten Fahrzeugkomponente empfangenen Nachrichten einen Inhalt aufweisen, der sich lediglich innerhalb eines Toleranzbereichs von dem Inhalt vorher von der Fahrzeugkomponente 50 empfangener Nachrichten unterscheidet, beispielsweise basierend auf einer Nummerierung von Nachrichten. Das Kontrollmodul 14 kann ausgebildet sein, um sicherzustellen, dass alle Daten, die durch die zumindest eine Nachricht vorliegen sollten, auch vorhanden und plausibel sind. Dabei kann die Plausibilisierung so implementiert werden, dass sie sich nicht mit geringfügigem Aufwand umgehen bzw. fälschen lässt.

In zumindest manchen Ausführungsbeispielen umfasst das Freischalten der ersten Fahrzeugkomponente das Aktivieren oder Starten eines Regelbetriebs der ersten Fahrzeugkomponente. Beispielsweise kann das Kontrollmodul 14 ausgebildet sein, um einen Zustand der ersten Fahrzeugkomponente 20 auf "Regelbetrieb" zu ändern. Der Regelbetrieb der ersten Fahrzeugkomponente kann beispielsweise ein Zustand sein, in dem die erste Fahrzeugkomponente vollständig funktionsfähig ist. Die erste Fahrzeugkomponente kann den Regelbetrieb beispielsweise einnehmen, nachdem eine Initialisierung, die die Freischaltung der ersten Fahrzeugkomponente umfassen kann, der ersten Fahrzeugkomponente stattgefunden hat.

In zumindest manchen Ausführungsbeispielen kann bereits das Empfangen der zumindest einen Nachricht von der zweiten Fahrzeugkomponente 50 implizieren, dass die zweite Fahrzeugkomponente 50 basierend auf dem gesicherten Verbund von Fahrzeugkomponenten freigeschalten wurde. Dies kann beispielsweise der Fall sein, falls die zweite Fahrzeugkomponente 50 (erst/lediglich) nach Ihrer erfolgreichen Freischaltung basierend auf dem gesicherten Verbund von Fahrzeugkomponenten die zumindest eine Nachricht an die erste Fahrzeugkomponente 20 oder die Vorrichtung 10 übermittelt. Alternativ oder zusätzlich kann die zumindest eine Nachricht implizieren, dass die zweite Fahrzeugkomponente 50 basierend auf dem gesicherten Verbund von Fahrzeugkomponenten freigeschalten wurde, falls die zumindest eine Nachricht eine vordefinierte Information umfasst, etwa eine Information darüber, dass die zweite Fahrzeugkomponente 50 einen vordefinierten Zustand aufweist oder dass durch die zweite Fahrzeugkomponente 50 eine vordefinierte Aktion ausgeführt wird. Beispielsweise kann die zumindest eine empfangene Nachricht implizieren, dass die zweite Fahrzeugkomponente 50 basierend auf dem gesicherten Verbund von Fahrzeugkomponenten freigeschalten wurde, falls die zumindest eine empfangene Nachricht impliziert, dass die zweite Fahrzeugkomponente 50 einen vordefinierten Zustand aufweist, etwa einen Regelbetriebs-Zustand oder einen freigeschaltenen Zustand. Alternativ oder zusätzlich kann die zumindest eine empfangene Nachricht implizieren, dass die zweite Fahrzeugkomponente 50 basierend auf dem gesicherten Verbund von Fahrzeugkomponenten freigeschalten wurde, falls die zumindest eine empfangene Nachricht impliziert, dass durch die zweite Fahrzeugkomponente 50 eine vordefinierte Aktion ausgeführt wird, etwa dass eine Startsequenz einer Antriebskomponente des Fahrzeugs durchgeführt wird.

In zumindest manchen Ausführungsbeispielen kann der gesicherte Verbund von Fahrzeugkomponenten zumindest eine weitere Vorrichtung zum Freischalten einer Fahrzeugkomponente gemäß einem der vorherigen Ausführungsbeispiele umfassen. Beispielsweise kann die zweite Fahrzeugkomponente 50 die weitere Vorrichtung umfassen. Die Vorrichtung der zweiten Fahrzeugkomponente 50 kann beispielsweise ausgebildet sein, um die zweite Fahrzeugkomponente basierend auf einem weiteren gesicherten Verbund von Fahrzeugkomponenten freizuschalten (durch Legitimieren einer weiteren Fahrzeugkomponente des weiteren gesicherten Verbunds und Freischalten der weiteren Fahrzeugkomponente durch den weiteren gesicherten Verbund). Die zweite Fahrzeugkomponente und der weitere gesicherte Verbund können den gesicherten Verbund, auf dem die Freischaltung der ersten Fahrzeugkomponente basiert, bilden oder von diesem umfasst sein. Die Vorrichtung 10 (oder die erste Fahrzeugkomponente 20 mit der Vorrichtung 10) können zusammen mit dem gesicherten Verbund von Fahrzeugkomponenten einen weiteren gesicherten Verbund von Fahrzeugkomponenten bilden, der transitiv für die Freischaltung einer dritten Fahrzeugkomponente genutzt werden kann.

In manchen Ausführungsbeispielen kann die zumindest eine Schnittstelle 12 ferner ausgebildet sein, um mit einer dritten Fahrzeugkomponente zu kommunizieren. Die dritte Fahrzeugkomponente kann beispielsweise Teil eines weiteren gesicherten Verbunds von Fahrzeugkomponenten des Fahrzeugs sein. Das Kontrollmodul 14 kann ausgebildet sein zum Empfangen zumindest einer weiteren Nachricht von der dritten Fahrzeugkomponente über die zumindest eine Schnittstelle. Das Kontrollmodul 14 kann ausgebildet sein zum Legitimieren der dritten Fahrzeugkomponente basierend auf der zumindest einen weiteren von der dritten Fahrzeugkomponente empfangenen Nachricht. Das Kontrollmodul 14 kann ausgebildet sein, um die erste Fahrzeugkomponente freizuschalten, falls die zumindest eine weitere empfangene Nachricht impliziert, dass die dritte Fahrzeugkomponente basierend auf dem weiteren gesicherten Verbund von Fahrzeugkomponenten freigeschalten wurde und falls die Legitimierung der dritten Fahrzeugkomponente erfolgreich ist. Dies kann alternativ oder kumulativ zur Freischaltung basierend auf der zweiten Fahrzeugkomponente geschehen. Im alternativen Fall kann das Kontrollmodul 14 ausgebildet sein, um die erste Fahrzeugkomponente freizuschalten, falls die zumindest eine empfangene Nachricht impliziert, dass die zweite Fahrzeugkomponente basierend auf dem gesicherten Verbund von Fahrzeugkomponenten freigeschalten wurde und falls die Legitimierung der zweiten Fahrzeugkomponente erfolgreich ist, oder falls die zumindest eine weitere empfangene Nachricht impliziert, dass die dritte Fahrzeugkomponente basierend auf dem weiteren gesicherten Verbund von Fahrzeugkomponenten freigeschalten wurde und falls die Legitimierung der dritten Fahrzeugkomponente erfolgreich ist. Im kumulativen Fall kann das Kontrollmodul 14 ausgebildet sein, um die erste Fahrzeugkomponente freizuschalten, falls die zumindest eine empfangene Nachricht impliziert, dass die zweite Fahrzeugkomponente basierend auf dem gesicherten Verbund von Fahrzeugkomponenten freigeschalten wurde und falls die Legitimierung der zweiten Fahrzeugkomponente erfolgreich ist und falls die zumindest eine weitere empfangene Nachricht impliziert, dass die dritte Fahrzeugkomponente basierend auf dem weiteren gesicherten Verbund von Fahrzeugkomponenten freigeschalten wurde und falls die Legitimierung der dritten Fahrzeugkomponente erfolgreich ist.

In einem beispielhaften Ausführungsbeispiel umfasst ein Fahrzeug-zu-Fahrzeug-Kommunikationsmodul 20 die Vorrichtung 10. Das Fahrzeug-zu-Fahrzeug-Kommunikationsmodul 20 ist in diesem Ausführungsbeispiel die erste Fahrzeugkomponente 20 ist. Eine Fahrzeug-zu-Fahrzeug-Kommunikation des Fahrzeug-zu-Fahrzeug-Kommunikationsmoduls 20 kann auf der Freischaltung des Fahrzeug-zu-Fahrzeug-Kommunikationsmoduls basieren. Beispielsweise kann das Fahrzeug-zu-Fahrzeug-Kommunikationsmodul ausgebildet sein, erst über Fahrzeug-zu-Fahrzeug-Kommunikation zu kommunizieren, wenn das Fahrzeug-zu-Fahrzeug-Kommunikation freigeschalten ist. Die Freischaltung kann beispielsweise durch Nachrichten geschehen, die im Regelbetrieb des Fahrzeug-zu-Fahrzeug-Kommunikationsmoduls verwendet werden. Gehört etwa ein Ortungsmodul zum gesicherten Verbund (etwa als zweite Fahrzeugkomponente), so kann die zumindest eine Nachricht Ortungsdaten des Ortungsmodul verwenden - sendet das Ortungsmodul Daten, so kann dadurch eine Freischaltung des Ortungsmoduls durch die zumindest eine Nachricht die Freischaltung des Fahrzeug-zu-Fahrzeug-Kommunikationsmoduls auslösen.

Mehr Details und Aspekte der Vorrichtung 10 und/oder des Verfahrens werden in Verbindung mit dem Konzept oder Beispielen genannt, die vorher oder später beschrieben werden. Die Vorrichtung 10 und/oder das Verfahren können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ausführungsbeispiele beziehen sich im Folgenden Beispielhaft auf ein Fahrzeug-zu-Fahrzeug-Steuergerät (auch Fahrzeug-zu-Fahrzeug-Kommunikationsmodul). Dieses kann der ersten Fahrzeugkomponente, wie sie in Verbindung mit den Fign. 1 und 2 eingeführt wurden entsprechen. Die folgenden Ausführungsbeispiele sind auch auf andere Fahrzeugkomponenten anwendbar, und sind nicht auf Fahrzeug-zu-Fahrzeug-Steuergeräte beschränkt. Im Allgemeinen ist das Konzept auch auf andere Systeme mit mehreren Komponenten anwendbar, etwa auf eine Zugehörigkeit (einer Recheneinheit) zu einem verteilten Verbund von Recheneinheiten.

In zumindest manchen Beispielen kann (oder muss) das Car2Car (Fahrzeug-zu-Fahrzeug)-Steuergerät im Rahmen seiner Standardfunktionalität (etwa seines Regelbetriebs) Daten von verschiedenen anderen Steuergeräten empfangen (z.B. Geschwindigkeit, Lenkwinkel, GPS Position etc.). Diese Daten können (oder sollen) authentisch, also kryptografisch manipulationsgeschützt, übertragen werden. Dies kann bereits aus anderen Gründen notwendig sein, z.B. zur Vermeidung von Sicherheitsproblemen. Die übertragenen Daten können beispielsweise der zumindest einen Nachricht entsprechen.

Das Car2Car-Steuergerät kann anhand der Tatsache, dass es kryptografisch geschützte Informationen im Rahmen seiner normalen Funktionskommunikation empfängt, bereits beispielsweise feststellen, dass sich weitere dem Fahrzeug zugehörige Steuergeräte im Kommunikationsverbund befinden. Beispielsweise können zumindest einige der Steuergeräte den gesicherten Verbund der Fign. 1 und 2 bilden. Ein Angreifer müsste sie alle ausgebaut und in Betrieb genommen haben, damit das Steuergerät auch außerhalb des Fahrzeugs funktionieren kann. Dieses Verfahren kann qualitativ skalierbar sein, indem zusätzliche Aktionen (bspw. Klemmenwechsel, WFS-Authentifikation, etc.) des Fahrzeugs authentisch gemeldet sein müssen. Es kann transitiv skalierbar sein, indem Ketten von Aktionen, die ihrerseits kryptographisch gesichert sind, durchgeführt werden müssen. Somit kann sich die Voraussetzung für die Entscheidung des Sendens in zumindest manchen Beispielen entsprechend den Anforderungen an das Konfidenzniveau skalieren lassen.

In zumindest manchen Ausführungsbeispielen wird keine separate Funktion zur Feststellung der Verbundszugehörigkeit benötigt, diese kann beispielsweise auf Nachrichten basieren, die das Fahrzeug-zu-Fahrzeug-Steuergerät im Regelbetrieb empfängt. Möglicher Overhead kann reduziert oder minimiert werden, da der Manipulationsschutz sich auf bereits bestehende Kommunikation beziehen kann und in manchen Ausführungsbeispielen keine extra Nachrichten ausschließlich zur Verbundauthentifikation eingeführt werden müssen. Das System skaliert in zumindest manchen Ausführungsbeispielen auf beliebig viele Steuergeräte. Von je mehr anderen Steuergeräten das Car2Car Steuergerät geschützte Funktionsdaten erhält, desto sicherer kann es sich sein, sich wirklich im Fahrzeug zu befinden. Zudem kann eine inhaltliche Skalierbarkeit durch weitere Steuergeräte und Zustände gegeben sein. Eine kryptografische Skalierbarkeit kann durch eine Nutzung von mehr Nachrichten von unterschiedlichen Sendern gegeben sein - mehr Nachrichten von unterschiedlichen Sendern müssen in manchen Ausführungsbeispielen authentifiziert werden, diese müssten gefälscht werden, um die Sicherheit (Absicherung) zu umgehen.

Zudem kann Transitivität genutzt werden. Falls andere Steuergeräte (Fahrzeugkomponenten) über andere Eigenschaften verfügen, die ihren Verbau im Fahrzeug sicherstellen, kann sich dies transitiv weiterreichen lassen. Falls beispielsweise ein Steuergerät Teil des (kryptografisch geschützten) Wegfahrsperrenverbunds ist (etwa des gesicherten Verbunds) und erst dann mit dem Senden der Funktionsdaten beginnt, sobald es seine eigene Verbundszugehörigkeit festgestellt hat (etwa basierend auf dem gesicherten Verbund freigeschalten wurde), kann diese Eigenschaft automatisch auf das Car2Car Steuergerät mit übergehen (z.B. Getriebe authentifiziert BCM (engl. Body Control Module, Karosseriekontrollmodul, ein zentrales Steuerungsmodul in Kraftfahrzeugen) und kann erst nach der Authentifizierung an das Car2Car-Steuergerät senden -> damit kann das Car2Car-Steuergerät wissen, dass das BCM auch authentisch ist, ohne selbst mit ihm geredet zu haben).

Ein Aktor, im Beispiel das Sendemodul im C2C-Steuergerät, kann seine Entscheidung zum Senden (immer) an einen zu prüfenden Freigabezustand koppeln. Dieser Zustand wird beispielsweise (nur) erreicht, wenn gewisse Authentizitätsaktionen durchgeführt wurden, also wenn kryptographisch authentisierte Nachrichten (etwa die zumindest eine Nachricht) im Aktor-Steuergerät authentifiziert werden können. Diese Aktionen können ausgewählt werden, um somit das Konfidenzlevel für die Freigabe zu skalieren.

Das Car2Car Steuergerät kann beispielsweise manipulationsgeschützte Daten von Steuergeräten empfangen, die besonders schwer aus dem Fahrzeug zu entfernen sind, z.B. Getriebe oder Motor. Weiterhin bieten sich Steuergeräte an, die bereits in anderen Authentifikationsverbünde eingebunden sind (etwa in den gesicherten Verbund). Außerdem kann die Anzahl der Steuergeräte möglichst hoch sein. Zudem können die kryptografischen Schlüssel innerhalb des Fahrzeugs eine ausreichende Spreizung (etwa eine hohe Hamming-Distanz) haben, so dass das Car2Car Steuergerät für jedes Datum eindeutig zuweisen kann, von welchem Steuergerät es kommt (etwa zur Legitimierung der zweiten Fahrzeugkomponente). In manchen Beispielen kann erst wenn alle diese Daten bzw. Nachrichten authentisch geprüft sind, die Freigabe für eine Aktion gegeben werden, in diesem Fall das Senden der C2C-Nachrichten.

Die Daten können, aber müssen nicht, kryptografisch geschützt werden. Das Car2Car Steuergerät kann ausgebildet sein, um sicherzustellen, dass alle Daten, die vorliegen sollten, auch vorhanden und plausibel sind. Dabei kann die Plausibilisierung so implementiert werden, dass sie sich nicht mit geringfügigem Aufwand umgehen bzw. fälschen lässt. In Falle von kryptografisch geschützten Nachrichten können die kryptografischen Schlüssel in allen Steuergeräten gleich sein, um deren initiale Verteilung zu erleichtern, wobei darauf geachtet werden kann, dass die Schlüssel nicht durch Programmierfehler exponiert werden.

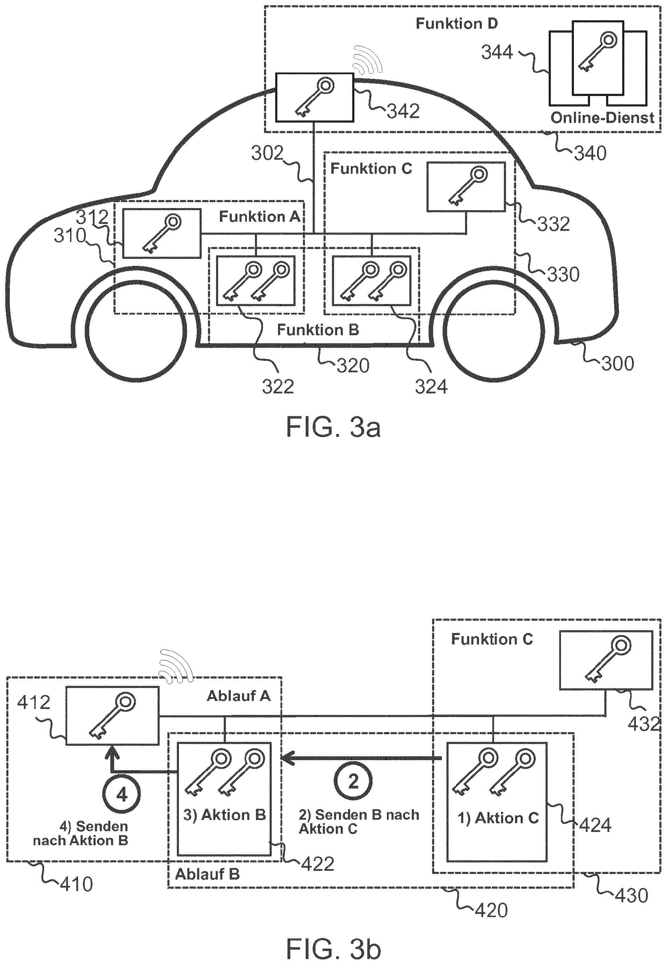

Fig. 3a zeigt ein Ausführungsbeispiel einer skalierbaren Verbundauthentifikation. Dabei werden in einem Fahrzeug 300 vier verschiedene Funktionen A 310, B 320, C 330 und D 340 ausgeführt, wobei Funktion D ein Steuergerät 342 zur Kommunikation mit einem Online-Dienst 344 umfasst. Die Funktionen A-D werden jeweils durch Steuergeräte mit eigenen Schlüsseln ausgeführt. Funktion A basiert auf den Steuergeräten 312 und 322, Funktion B auf den Steuergeräten 322 und 324, Funktion C auf den Steuergeräten 324 und 332 und Funktion D auf dem Steuergerät 342. Jedes Steuergerät umfasst zumindest einen Schlüssel; Steuergeräte, die mehr als einer Funktion zugeordnet sind (z.B. 322; 324) können mehr als einen Schlüssel umfassen. Die Kommunikation zwischen den Steuergeräten kann durch die Schlüssel authentifiziert sein. Die Steuergeräte können beispielsweise bei der Fertigung mit Schlüsseln bedatet werden. Die Steuergeräte 312, 322, 324, 332 und 342 sind über eine gemeinsame Kommunikationsverbindung, etwa einen Bus 302, miteinander verbunden.

Fig. 3b zeigt ein Ausführungsbeispiel, bei dem die Freigabe eines Steuergeräts durch eine Transitivität von Fahrzeugaktionen (Zuständen) ausgelöst wird. Ablauf A 410 basiert auf den Steuergeräten 412 (beispielsweise ein Steuergerät für eine Kommunikation) und dem Steuergerät 422, Ablauf B 420 basiert auf den Steuergeräten 422 und 424, und Funktion C 430 basiert auf den Steuergeräten 424 und 432. Jedes Steuergerät umfasst zumindest einen Schlüssel; Steuergeräte, die mehr als einer Funktion zugeordnet sind (z.B. 422; 424) können mehr als einen Schlüssel umfassen. Die Kommunikation zwischen den Steuergeräten kann durch die Schlüssel authentifiziert sein. Die Steuergeräte 412, 424 und 432 sind über eine gemeinsame Kommunikationsverbindung, etwa einen Bus, miteinander verbunden. Wird nun Funktion C durch Steuergerät 424 ausgeführt (1) (etwa Steuergerät 424 basierend auf einem gesicherten Verbund freigeschaltet) und das Steuergerät 422 nach der Aktion C innerhalb des Ablaufs B darüber Benachrichtigt (2) (etwa über die zumindest eine Nachricht), so kann das Steuergerät 422 die Aktion B ausführen (3) (etwa das Steuergerät 422 als erstes Steuergerät freischalten) und nach Ausführen der Aktion B Steuermodul 412 benachrichtigen (4) (damit dieses transitiv freigeschalten werden kann), und somit eine Kommunikation des Steuermoduls 412 freigeben. Somit kann eine Freigabe durch nacheinander ausgeführte Aktionen im Fahrzeug ausgelöst werden. Eine Aktion, beispielsweise ein Klemmensignal, kann das Senden einer authentischen Nachricht auslösen (etwa der Nachricht von Steuergerät 424 zu Steuergerät 422, oder der Nachricht von Steuergerät 422 zu Steuergerät 412, die der zumindest einen Nachricht der Fign. 1 und 2 entsprechen kann), und damit die Freigabe des Steuergeräts 412 ermöglichen.

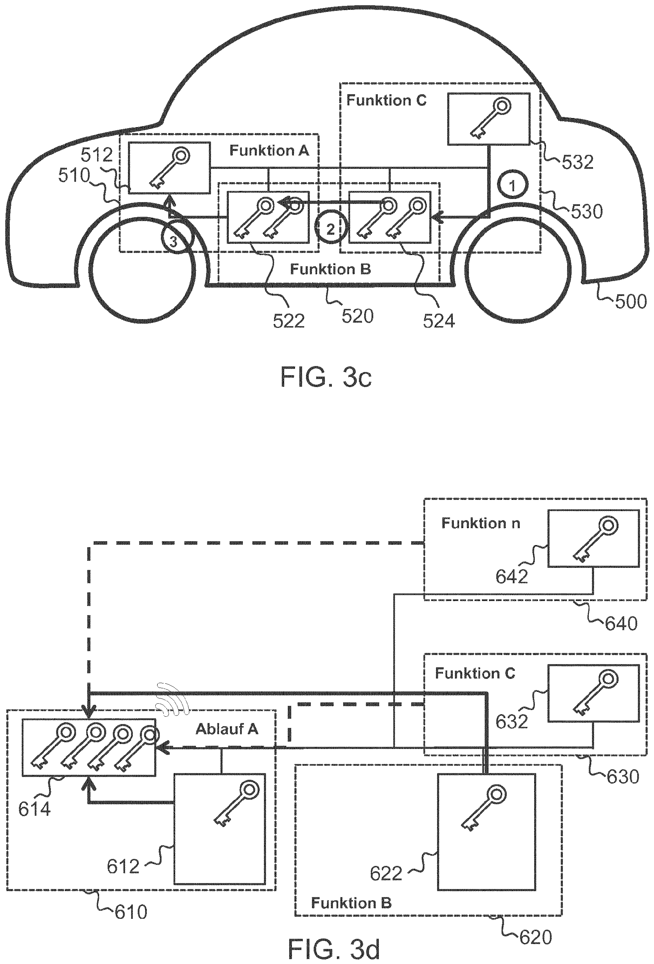

Fig. 3c zeigt ein Ausführungsbeispiel, bei dem die Freigabe eines Steuergeräts durch eine Transitivität von kryptographischen Operationen ausgelöst wird. Dabei können nacheinander ausgeführte, kryptographische Operationen unter Nutzung unterschiedlicher Schlüssel genutzt werden. Ein Fahrzeug 500 umfasst die Funktionen A 510, B 520 und C 530. Funktion A basiert auf den Steuergeräten 512 und 522, Funktion B basiert auf den Steuergeräten 522 und 524 und Funktion C basiert auf den Steuergeräten 524 und 532. Jedes Steuergerät umfasst zumindest einen Schlüssel; Steuergeräte, die mehr als einer Funktion zugeordnet sind (z.B. 522; 524) können mehr als einen Schlüssel umfassen. Die Kommunikation zwischen den Steuergeräten kann durch die Schlüssel authentifiziert sein. Die Steuergeräte sind über eine gemeinsame Kommunikationsverbindung, etwa einen Bus, miteinander verbunden. In einer ersten kryptographischen Operation (1) kann Steuergerät 532 Steuergerät 524 freigeben (etwa durch Legitimierung des Steuergeräts 532 gegenüber dem Steuergerät 524 mittels zumindest einer kryptografisch geschützten Nachricht), in einer zweiten kryptographischen Operation (2) kann Steuergerät 524 (transitiv) Steuergerät 522 freigeben (etwa durch Legitimierung des Steuergeräts 524 gegenüber dem Steuergerät 522 mittels zumindest einer kryptografisch geschützten Nachricht), und in einer dritten kryptographischen Operation (3) kann Steuergerät 522 (transitiv) Steuergerät 512 freigeben (wie zuvor). Die kryptographischen Operationen (1), (2) und (3) können aufeinander aufbauen, beispielsweise (zwingend) in dieser Reihenfolge ausgeführt werden. Die kryptographischen Operationen können das Senden einer kryptographischen Nachricht und/oder das Durchführen eines kryptographischen Challenge-Response (Aufforderung-Antwort)-Verfahrens umfassen.

Fig. 3d zeigt eine kryptographische Skalierbarkeit der Freigabe von Steuergeräten durch nacheinander ausgeführte Aktionen im Fahrzeug, wobei eine Aktion (beispielsweise ein Klemmensignal, ...) das Senden einer authentischen Nachricht auslöst. Fig. zeigt Ablauf A 610, Funktion B 620, Funktion C 630 und Funktion n 640. Ablauf A basiert auf dem (freizugebenden) Steuergerät 614 und dem Steuergerät 612, Funktion B basiert auf Steuergerät 622, Funktion C basiert auf Steuergerät 632 und Funktion n basiert auf Steuergerät 642. Jedes Steuergerät umfasst zumindest einen Schlüssel; kommuniziert ein Steuergerät mit mehr als einem anderen Steuergerät (etwa das freizugebende Steuergerät 614 mit den Steuergeräten 612, 622, 632 und 642, dann kann dieses Steuergerät mehrere Schlüssel (etwa 4 Schlüssel) umfassen. Die Kommunikation zwischen den Steuergeräten kann durch die Schlüssel authentifiziert sein. Die Steuergeräte sind (zumindest teilweise) über eine gemeinsame Kommunikationsverbindung, etwa einen Bus, miteinander verbunden. Dabei kann das freizugebende Steuergerät 614 basierend auf kryptographischen Operationen (die ähnlich implementiert sein können wie die kryptographischen Operationen von Fig. 3c) der anderen Steuergeräte 612, 622, 632, 642 - alternativ oder kumulativ - freigeschaltet werden. Beispielsweise kann jedes der Steuergeräte 612, 622, 632 und 642 jeweils Teil eines gesicherten Verbunds sein. Steuergerät 614 kann ausgebildet sein, um die Steuergeräte 612, 622, 632 und 642 zu legitimieren, und falls eines (alternative Freischaltung) oder alle (kumulative Freischaltung) von ihnen freigeschalten sind, sich selbst freischalten.

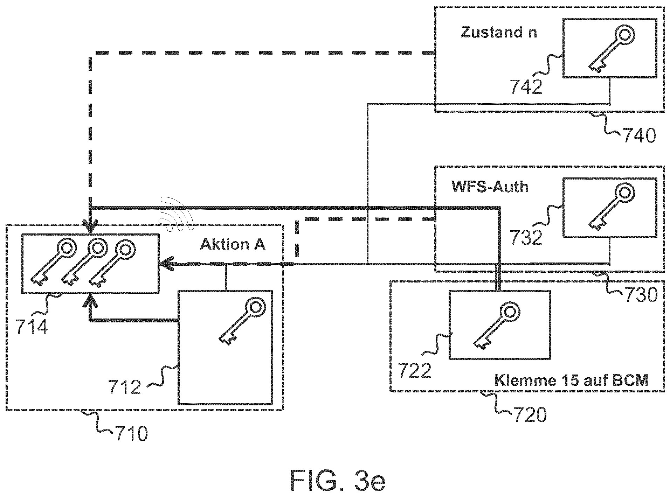

Fig. 3e zeigt eine Skalierbarkeit der Freigabe durch Fahrzeugaktionen (Zustände). Das System kann auf beliebig viele Steuergeräte skalieren. Von je mehr anderen Steuergeräten das Car2Car Steuergerät geschützte Funktionsdaten erhält, desto sicherer kann es sich beispielsweise sein, sich wirklich im Fahrzeug zu befinden. Fig. 3e zeigt Aktion A 710 und Funktionen B (Klemme 15 auf BCM) 720, C (Wegfahrsperren-Authentifizierung) 730 und N (Zustand n) 740. Aktion A basiert auf dem freizugebenden Steuergerät 714 und dem Steuergerät 712, Funktion B basiert auf Steuergerät 722, Funktion C basiert auf Steuergerät 732 und Funktion N basiert auf Steuergerät 742. Jedes Steuergerät umfasst zumindest einen Schlüssel; kommuniziert ein Steuergerät mit mehr als einem anderen Steuergerät (etwa das freizugebende Steuergerät 714 mit den Steuergeräten 712, 722, 732 und 742, dann kann dieses Steuergerät mehrere Schlüssel (etwa 4 Schlüssel) umfassen. Die Kommunikation zwischen den Steuergeräten kann durch die Schlüssel authentifiziert sein. Die Steuergeräte sind (zumindest teilweise) über eine gemeinsame Kommunikationsverbindung, etwa einen Bus, miteinander verbunden. Dabei kann das freizugebende Steuergerät 714 basierend auf Aktionen der anderen Steuergeräte 712, 722, 732, 742 - alternativ oder kumulativ - freigeschaltet werden. Beispielsweise kann jedes der Steuergeräte 712, 722, 732 und 742 jeweils Teil eines gesicherten Verbunds sein. Steuergerät 714 kann ausgebildet sein, um die Steuergeräte 712, 722, 732 und 742 zu legitimieren, und falls eines (alternative Freischaltung) oder alle (kumulative Freischaltung) von ihnen freigeschalten sind, sich selbst freischalten. Die Skalierbarkeit kann inhaltlich durch weitere Steuergeräte und Zustände erreicht werden.

Mehr Details und Aspekte der Steuergeräte (Fahrzeugkomponenten) und/oder Fahrzeuge der Fign. 3a bis 3e werden in Verbindung mit dem Konzept oder Beispielen genannt, die vorher (z.B. Fig. 1 und 2) beschrieben wurden. Die Steuergeräte oder die Fahrzeuge können ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Bezugszeichenliste**

| | | | |
|---|---|---|---|
| 10 | Vorrichtung | 412 | Steuergerät |
| 12 | Schnittstelle | 420 | Ablauf B |
| 14 | Kontrollmodul | 422 | Steuergerät |
| 20 | Erste Fahrzeugkomponente | 424 | Steuergerät |
| 50 | Zweite Fahrzeugkomponente | 430 | Funktion C |
| 100 | Fahrzeug | 432 | Steuergerät |
| 110 | Empfangen von zumindest einer Nachricht | 500 | Fahrzeug |
| | | 510 | Funktion A |
| 120 | Legitimieren der zweiten Fahrzeugkomponente | 512 | Steuergerät |
| | | 520 | Funktion B |
| 130 | Freischalten der ersten Fahrzeugkomponente | 522 | Steuergerät |
| 300 | Fahrzeug | 524 | Steuergerät |
| 310 | Funktion A | 530 | Funktion C |
| 302 | Gemeinsame Kommunikationsverbindung / Bus | 532 | Steuergerät |
| | | 610 | Ablauf A |
| 312 | Steuergerät | 612 | Steuergerät |
| 320 | Funktion B | 620 | Funktion B |
| 322 | Steuergerät | 622 | Steuergerät |
| 324 | Steuergerät | 630 | Funktion C |
| 330 | Funktion C | 632 | Steuergerät |
| 332 | Steuergerät | 640 | Funktion n |
| 340 | Funktion D | 642 | Steuergerät |
| 342 | Steuergerät | 710 | Ablauf A |
| 410 | Ablauf A | 712 | Steuergerät |
| 720 | Funktion B | 732 | Steuergerät |
| 722 | Steuergerät | 740 | Funktion n |
| 730 | Funktion C | 742 | Steuergerät |

## Patentansprüche

1. Verfahren zum Freischalten einer ersten Fahrzeugkomponente (20) eines Fahrzeugs (100), umfassend
Empfangen (110) zumindest einer Nachricht von einer zweiten Fahrzeugkomponente (50), wobei die zweite Fahrzeugkomponente (50) Teil eines gesicherten Verbunds von Fahrzeugkomponenten des Fahrzeugs (100) ist, wobei der gesicherte Verbund von Fahrzeugkomponenten eine Mehrzahl von Fahrzeugkomponenten, die gegenseitig so verknüpft sind, dass ein Kompromittieren einer Fahrzeugkomponente der Mehrzahl von Fahrzeugkomponenten ein Freischalten der anderen Fahrzeugkomponenten der Mehrzahl von Fahrzeugkomponenten des gesicherten Verbunds verhindert, umfasst;
Legitimieren (120) der zweiten Fahrzeugkomponente (50) basierend auf der zumindest einen von der zweiten Fahrzeugkomponente (50) empfangenen Nachricht; und
Freischalten (130) der ersten Fahrzeugkomponente (20), falls die zumindest eine empfangene Nachricht impliziert, dass die zweite Fahrzeugkomponente (50) basierend auf dem gesicherten Verbund von Fahrzeugkomponenten freigeschalten wurde und falls die Legitimierung der zweiten Fahrzeugkomponente (50) erfolgreich ist.

2. Verfahren gemäß Anspruch 1, wobei das Legitimieren (120) der zweiten Fahrzeugkomponente (50) ein Legitimieren der zweiten Fahrzeugkomponente (50) basierend auf einem Aufforderung-Antwort-Authentifizierungsverfahren umfasst.

3. Verfahren gemäß Anspruch 1, wobei das Legitimieren (120) der zweiten Fahrzeugkomponente (50) ein Legitimieren der zweiten Fahrzeugkomponente (50) durch eine Plausibilitätsprüfung eines Inhalts der zumindest einen Nachricht umfasst.

4. Verfahren gemäß Anspruch 1, wobei das Legitimieren (120) der zweiten Fahrzeugkomponente (50) ein Legitimieren der zweiten Fahrzeugkomponente (50) basierend auf kryptografisch geschützten Nachrichten der zweiten Fahrzeugkomponente (50) umfasst.

5. Verfahren gemäß Anspruch 4, wobei die kryptografisch geschützten Nachrichten kryptografisch signiert sind, wobei die kryptografisch geschützten Nachrichten kryptografisch verschlüsselt sind, und/oder wobei die kryptografisch geschützten Nachrichten einen basierend auf einem kryptografischen Schlüssel berechneten Wert umfassen.

6. Verfahren gemäß einem der Ansprüche 4 oder 5, ferner umfassend Speichern kryptografischer Informationen über zuvor empfangene kryptografisch geschützte Nachrichten der zweiten Fahrzeugkomponente (50), wobei die zweite Fahrzeugkomponente (50) legitimiert wird, falls kryptografisch geschützte Nachrichten, die innerhalb eines vordefinierten Zeitintervalls vor dem Freischalten der Fahrzeugkomponente empfangen wurden, im Einklang stehen mit den gespeicherten kryptografischen Informationen.

7. Verfahren gemäß einem der vorherigen Ansprüche, wobei der gesicherte Verbund ein Wegfahrsperrenverbund des Fahrzeugs ist,
oder wobei der gesicherte Verbund ein Diebstahlschutzverbund des Fahrzeugs ist.

8. Verfahren gemäß einem der vorherigen Ansprüche, wobei das Empfangen der zumindest einen Nachricht von der zweiten Fahrzeugkomponente (50) impliziert, dass die zweite Fahrzeugkomponente (50) basierend auf dem gesicherten Verbund von Fahrzeugkomponenten freigeschalten wurde.

9. Verfahren gemäß einem der vorherigen Ansprüche, wobei die zumindest eine empfangene Nachricht impliziert, dass die zweite Fahrzeugkomponente (50) basierend auf dem gesicherten Verbund von Fahrzeugkomponenten freigeschalten wurde,
falls die zumindest eine empfangene Nachricht impliziert, dass die zweite Fahrzeugkomponente (50) einen vordefinierten Zustand aufweist,
oder falls die zumindest eine empfangene Nachricht impliziert, dass durch die zweite Fahrzeugkomponente (50) eine vordefinierte Aktion ausgeführt wird.

10. Verfahren gemäß einem der vorherigen Ansprüche, wobei die erste Fahrzeugkomponente (20) nicht Teil des gesicherten Verbunds von Fahrzeugkomponenten ist,
und/oder wobei der gesicherte Verbund die zweite Fahrzeugkomponente freischaltet, ohne die erste Fahrzeugkomponente (20) oder die Vorrichtung (10) zu involvieren.

11. Verfahren gemäß einem der vorhergehenden Ansprüche, wobei die zumindest eine Nachricht, auf der die Freischaltung der ersten Fahrzeugkomponente (20) basiert, zumindest eine Nachricht ist, die zum Regelbetrieb der ersten Fahrzeugkomponente (20) oder zum Regelbetrieb der zweiten Fahrzeugkomponente (50) genutzt wird, und/oder wobei die zumindest eine Nachricht, auf der die Freischaltung der ersten Fahrzeugkomponente (20) basiert, zumindest eine Nachricht ist, die nicht ausschließlich zum Zweck der Freischaltung der Fahrzeugkomponente (20) empfangen wird oder die nicht ausschließlich zum Zweck der Freischaltung der ersten Fahrzeugkomponente von der zweiten Fahrzeugkomponente (50) gesendet wird.

12. Programm mit einem Programmcode zum Durchführen des Verfahrens gemäß einem der Ansprüche 1 bis 11, wenn der Programmcode auf einer Vorrichtung zum Freischalten einer ersten Fahrzeugkomponente ausgeführt wird.

13. Fahrzeug (100), umfassend:
eine erste Fahrzeugkomponente (20);
eine zweite Fahrzeugkomponente (50); und
eine Vorrichtung (10) zum Freischalten der ersten Fahrzeugkomponente, wobei die Vorrichtung zumindest eine Schnittstelle (12), die zur Kommunikation mit der zweiten Fahrzeugkomponente (50) des Fahrzeugs (100) ausgebildet ist, und ein Kontrollmodul (14) umfasst, wobei die zumindest eine Schnittstelle (12) und das Kontrollmodul (14) ausgebildet sind, dass Verfahren gemäß einem der Ansprüche 1 bis 11 durchzuführen.

14. Fahrzeug (100) nach Anspruch 13, wobei der gesicherte Verbund von Fahrzeugkomponenten zumindest eine weitere Vorrichtung (10) umfasst, und/oder wobei die Vorrichtung (10) zusammen mit dem gesicherten Verbund von Fahrzeugkomponenten einen weiteren gesicherten Verbund von Fahrzeugkomponenten bildet.

15. Fahrzeug (100) nach Anspruch 13 oder Anspruch 14, wobei die erste Fahrzeugkomponente (20) ein Fahrzeug-zu-Fahrzeug-Kommunikationsmodul ist, wobei eine Fahrzeug-zu-Fahrzeug-Kommunikation des Fahrzeug-zu-Fahrzeug-Kommunikationsmoduls (20) auf der Freischaltung des Fahrzeug-zu-Fahrzeug-Kommunikationsmoduls basiert.

## Claims

1. Method for enabling a first vehicle component (20) of a vehicle (100), comprising
Receiving (110) at least one message from a second vehicle component (50), wherein the second vehicle component (50) is part of a secured cluster of vehicle components of the vehicle (100), wherein the secured cluster of vehicle components comprises a plurality of vehicle components that are mutually linked such that compromising one vehicle component of the plurality of vehicle components prevents enabling of the other vehicle components of the plurality of vehicle components of the secured cluster;
Legitimizing (120) the second vehicle component (50) on the basis of the at least one message received from the second vehicle component (50); and
Enabling (130) the first vehicle component (20) if the at least one received message implies that the second vehicle component (50) was enabled on the basis of the secured cluster of vehicle components and if the legitimization of the second vehicle component (50) is successful.

2. Method according to claim 1, wherein the legitimizing (120) of the second vehicle component (50) comprises legitimizing the second vehicle component (50) on the basis of a challenge-response authentication method.

3. Method according to claim 1, wherein the legitimizing (120) of the second vehicle component (50) comprises legitimizing the second vehicle component (50) by a plausibility check of the content of the at least one message.

4. Method according to claim 1, wherein the legitimizing (120) of the second vehicle component (50) comprises legitimizing the second vehicle component (50) on the basis of cryptographically protected messages from the second vehicle component (50).

5. Method according to claim 4, wherein the cryptographically protected messages are cryptographically signed, wherein the cryptographically protected messages are cryptographically encrypted, and/or wherein the cryptographically protected messages comprise a value calculated on the basis of a cryptographic key.

6. Method according to either of claims 4 or 5, further comprising storing cryptographic information regarding previously received cryptographically protected messages from the second vehicle component (50), wherein the second vehicle component (50) is legitimized if cryptographically protected messages received within a predefined time interval before the enabling of the vehicle component are consistent with the stored cryptographic information.

7. Method according to any of the preceding claims, wherein the secured cluster is an immobilizer cluster of the vehicle,
or wherein the secured cluster is an anti-theft cluster of the vehicle.

8. Method according to any of the preceding claims, wherein the receipt of the at least one message from the second vehicle component (50) implies that the second vehicle component (50) was enabled on the basis of the secured cluster of vehicle components.

9. Method according to any of the preceding claims, wherein the at least one received message implies that the second vehicle component (50) was enabled on the basis of the secured cluster of vehicle components if the at least one received message implies that the second vehicle component (50) has a predefined state, or if the at least one received message implies that a predefined action is carried out by the second vehicle component (50).

10. Method according to any of the preceding claims, wherein the first vehicle component (20) is not part of the secured cluster of vehicle components,
and/or wherein the secured cluster enables the second vehicle component without involving the first vehicle component (20) or the device (10).

11. Method according to any of the preceding claims, wherein the at least one message on which the enabling of the first vehicle component (20) is based is at least one message that is used for the normal operation of the first vehicle component (20) or for the normal operation of the second vehicle component (50),
and/or wherein the at least one message on which the enabling of the first vehicle component (20) is based is at least one message that is not received solely for the purpose of enabling the vehicle component (20) or that is not sent by the second vehicle component (50) solely for the purpose of enabling the first vehicle component.

12. Program comprising a program code for implementing the method according to any of claims 1 to 11 when the program code is executed on a device for enabling a first vehicle component.

13. Vehicle (100), comprising:
a first vehicle component (20);
a second vehicle component (50); and
a device (10) for enabling the first vehicle component, wherein the device comprises at least one interface (12), which is designed to communicate with the second vehicle component (50) of the vehicle (100), and a control module (14), wherein the at least one interface (12) and the control module (14) are designed to implement the method according to any of claims 1 to 11.

14. Vehicle (100) according to claim 13, wherein the secured cluster of vehicle components comprises at least one further device (10), and/or wherein the device (10) together with the secured cluster of vehicle components forms a further secured cluster of vehicle components.

15. Vehicle (100) according to claim 13 or claim 14, wherein the first vehicle component (20) is a vehicle-to-vehicle communication module, wherein vehicle-to-vehicle communication of the vehicle-to-vehicle communication module (20) is based on the enabling of the vehicle-to-vehicle communication module.

## Revendications

1. Procédé permettant le déverrouillage d'un premier composant de véhicule (20) d'un véhicule (100), comprenant
la réception (110) d'au moins un message en provenance d'un second composant de véhicule (50), dans lequel le second composant de véhicule (50) fait partie d'un réseau sécurisé de composants de véhicule du véhicule (100), dans lequel le réseau sécurisé de composants de véhicule comprend une pluralité de composants de véhicule qui sont mutuellement liés de sorte que le fait qu'un composant de véhicule de la pluralité de composants de véhicule soit compromis empêche le déverrouillage des autres composants de véhicule de la pluralité de composants de véhicule du réseau sécurisé ;
la légitimation (120) du second composant de véhicule (50) sur la base de l'au moins un message reçu en provenance du second composant de véhicule (50) ; et
le déverrouillage (130) du premier composant de véhicule (20), si l'au moins un message reçu implique que le second composant de véhicule (50) a été déverrouillé sur la base du réseau sécurisé de composants de véhicule et si la légitimation du second composant de véhicule (50) est effectuée avec succès.

2. Procédé selon la revendication 1, dans lequel la légitimation (120) du second composant de véhicule (50) comprend la légitimation du second composant de véhicule (50) sur la base d'un procédé d'authentification de demande-réponse.

3. Procédé selon la revendication 1, dans lequel la légitimation (120) du second composant de véhicule (50) comprend la légitimation du second composant de véhicule (50) au moyen d'un contrôle de plausibilité d'un contenu de l'au moins un message.

4. Procédé selon la revendication 1, dans lequel la légitimation (120) du second composant de véhicule (50) comprend la légitimation du second composant de véhicule (50) sur la base de messages protégés de manière cryptographique du second composant de véhicule (50).

5. Procédé selon la revendication 4, dans lequel les messages protégés de manière cryptographique sont signés de manière cryptographique, dans lequel les messages protégés de manière cryptographique sont chiffrés de manière cryptographique, et/ou dans lequel les messages protégés de manière cryptographique comprennent une valeur calculée sur la base d'une clé cryptographique.

6. Procédé selon l'une des revendications 4 ou 5, comprenant en outre le stockage d'informations cryptographiques concernant des messages protégés de manière cryptographique reçus précédemment du second composant de véhicule (50), dans lequel le second composant de véhicule (50) est légitimé si des messages protégés de manière cryptographique reçus dans un intervalle de temps prédéfini avant le déverrouillage du composant de véhicule sont conformes aux informations cryptographiques stockées.

7. Procédé selon l'une des revendications précédentes, dans lequel le réseau sécurisé est un réseau antidémarrage du véhicule,
ou dans lequel le réseau sécurisé est un réseau antivol du véhicule.

8. Procédé selon l'une des revendications précédentes, dans lequel la réception de l'au moins un message en provenance du second composant de véhicule (50) implique que le second composant de véhicule (50) a été déverrouillé sur la base du réseau sécurisé de composants de véhicule.

9. Procédé selon l'une des revendications précédentes, dans lequel l'au moins un message reçu implique que le second composant de véhicule (50) a été déverrouillé sur la base du réseau sécurisé de composants de véhicule, si l'au moins un message reçu implique que le second composant de véhicule (50) présente un état prédéfini, ou si l'au moins un message reçu implique qu'une action prédéfinie est exécutée par le second composant de véhicule (50).

10. Procédé selon l'une des revendications précédentes, dans lequel le premier composant de véhicule (20) ne fait pas partie du réseau sécurisé de composants de véhicule,
et/ou dans lequel le réseau sécurisé déverrouille le second composant de véhicule sans impliquer le premier composant de véhicule (20) ou le dispositif (10).

11. Procédé selon l'une des revendications précédentes, dans lequel l'au moins un message sur lequel est basé le déverrouillage du premier composant de véhicule (20) est au moins un message qui est utilisé pour le fonctionnement régulier du premier composant de véhicule (20) ou pour le fonctionnement régulier du second composant de véhicule (50),
et/ou dans lequel l'au moins un message sur lequel est basé le déverrouillage du premier composant de véhicule (20) est au moins un message qui n'est pas reçu exclusivement dans le but de déverrouiller le composant de véhicule (20) ou qui n'est pas envoyé par le second composant de véhicule (50) exclusivement dans le but de déverrouiller le premier composant de véhicule.

12. Programme comportant un code de programme permettant de mettre en oeuvre le procédé selon l'une des revendications 1 à 11, lorsque le code de programme est exécuté sur un dispositif permettant le déverrouillage d'un premier composant de véhicule.

13. Véhicule (100), comprenant :
un premier composant de véhicule (20) ;
un second composant de véhicule (50) ; et
un dispositif (10) permettant le déverrouillage du premier composant de véhicule, dans lequel le dispositif comprend au moins une interface (12) qui est configurée pour communiquer avec le second composant de véhicule (50) du véhicule (100), et un module de contrôle (14), dans lequel l'au moins une interface (12) et le module de contrôle (14) sont configurés pour mettre en oeuvre le procédé selon l'une des revendications 1 à 11.

14. Véhicule (100) selon la revendication 13, dans lequel le réseau sécurisé de composants de véhicule comprend au moins un autre dispositif (10), et/ou dans lequel le dispositif (10) forme, conjointement avec le réseau sécurisé de composants de véhicule, un autre réseau sécurisé de composants de véhicule.

15. Véhicule (100) selon la revendication 13 ou la revendication 14, dans lequel le premier composant de véhicule (20) est un module de communication de véhicule à véhicule, dans lequel une communication de véhicule à véhicule du module de communication de véhicule à véhicule (20) est basée sur le déverrouillage du module de communication de véhicule à véhicule.
